# EUROPEAN PATENT APPLICATION

(11) **EP 4 772 325 A1**
(43) Date of publication of application: **08.07.2026**
(21) Application number: 24874852.7
(22) Date of filing: 16.08.2024
(51) Int. Cl.: B29C 45/34, B29C 45/17

(54) **AIR VENT ASSEMBLY COMPRISING PLURALITY OF PARTS AND INJECTION MOLDING APPARATUS COMPRISING SAME**

(30) Priority: 07.10.2023 KR 20230133843; 27.10.2023 KR 20230146099
(71) Applicant: Samsung Electronics Co., Ltd., Suwon-si, Gyeonggi-do 16677 (KR)
(72) Inventor: LEE, Sangwook, Suwon-si, Gyeonggi-do 16677 (KR); KIM, Jonghyun, Suwon-si, Gyeonggi-do 16677 (KR); KIM, Yongyeon, Suwon-si, Gyeonggi-do 16677 (KR); NAM, Yonghyun, Suwon-si, Gyeonggi-do 16677 (KR); AHN, Jinman, Suwon-si, Gyeonggi-do 16677 (KR); LEE, Changju, Suwon-si, Gyeonggi-do 16677 (KR); JEON, Jindeuk, Suwon-si, Gyeonggi-do 16677 (KR); CHA, Sangwoo, Suwon-si, Gyeonggi-do 16677 (KR); CHOI, Younghee, Suwon-si, Gyeonggi-do 16677 (KR); CHOI, Hyunsuk, Suwon-si, Gyeonggi-do 16677 (KR)
(74) Representative: Gulde & Partner
(86) International application number: PCT/KR2024/012248
(87) International publication number: WO 2025/075293

(57) **Abstract**

An air vent assembly is disclosed. The air vent assembly comprises: a first part including a plurality of protrusion portions; a plurality of slits into which each of the plurality of protrusion portions is inserted; and a second part made of metal, integrally formed, and including an accommodation groove in which the first part is accommodated, wherein each of the plurality of slits includes a protrusion protruding from a partition wall dividing the plurality of slits to the inside of each of the plurality of slits so as to be in contact with the plurality of protrusion portions, and the protrusion maintains a gap between the protrusion portions and the partition wall by separating one protrusion portion accommodated in one slit from the partition wall and limiting movement of the one protrusion portion in a direction perpendicular to the longitudinal direction of the slits. Other various embodiments are possible.

## Description

### [Technical Field]

The present disclosure relates to an air vent assembly including a plurality of parts and an injection molding device including the same.

### [Background Art]

Injection molding may be used for molding a thermoplastic resin or a thermosetting resin. A molding device for the injection molding may include an air vent in order to discharge air or gas contained in a resin disposed in a cavity inside a mold used for the injection molding.

The above-described information may be provided as a related art for the purpose of helping understanding of the present disclosure. No argument or decision is made as to whether any of the above description may be applied as a prior art related to the present disclosure.

### [Disclosure]

### [Technical Solution]

### [Description of the Drawings]

FIG. 1 is a partial perspective view indicating an exemplary injection molding device.
FIG. 2 is a cross-sectional view indicating an exemplary injection molding device.
FIG. 3 is a perspective view indicating an exemplary air vent assembly.
FIG. 4A is diagrams indicating a first part of an exemplary air vent assembly.
FIG. 4B is a diagram indicating a side surface of an exemplary bridge of a first part.
FIG. 4C is an enlarged view of a portion of an exemplary air vent assembly according to coupling of a first part and a second part.
FIG. 5 are diagrams indicating a second part of an exemplary air vent assembly.
FIG. 6 is a cross-sectional view of an exemplary air vent assembly in which a first part and a second part are assembled.
FIGS. 7A and 7B are top views indicating an exemplary air vent assembly.

### [Mode for Invention]

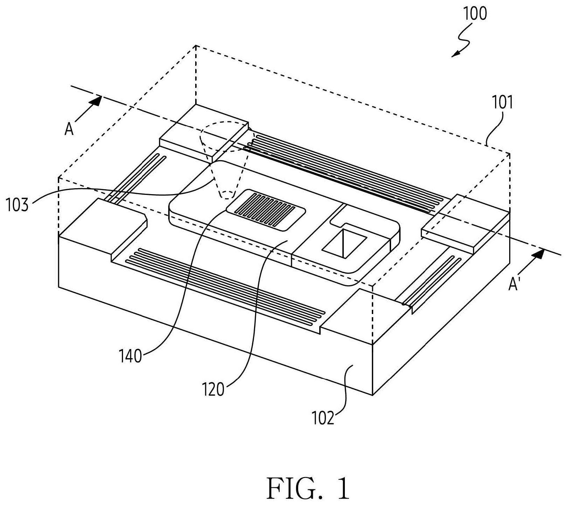

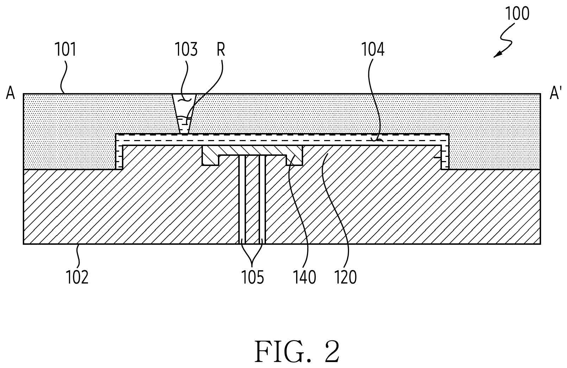

FIG. 1 is a partial perspective view indicating an exemplary injection molding device. FIG. 2 is a cross-sectional view indicating an exemplary injection molding device.

Referring to FIGS. 1 and 2, an injection molding device 100 may mold a molten resin. Injection molding is a process in which a resin in a powder state is melted by applying heat, and the molten resin is injected into the mold and then cooled to form a product.

The injection molding device 100 may include a first mold 101 and a second mold 102. One of the first mold 101 or the second mold 102 may be fixed, and another one may move. For example, the second mold 102 may be a fixed mold, and the first mold 101 may be a movable mold. The first mold 101 may linearly move toward the second mold 102. The first mold 101 and the second mold 102 face each other, and may be selectively opened or closed according to a movement of the first mold 101.

The first mold 101 may form a molded article by contacting the second mold 102. The molded article may be formed from resin or plastic, but is not limited thereto. In a state in which the resin or the plastic, which is a molding material R, is melted, it may be introduced into the molds 101 and 102 through an inlet 103. The molding material R may by be pressed through an external device and transmitted to the inlet 103 through a nozzle. The molten molding material R introduced through the inlet 103 may reach a cavity 104. After sufficiently filling the cavity 104, the molten molding material R may be cooled. The molding material R may form a molding product by being cooled in a mold.

The injection molding device 100 may further include an air vent assembly 140 fastened to a core 120 of the second mold 102. The air vent assembly 140 may be configured to discharge gas included in the molding material R or air in the cavity 104 out of the mold while processing the injection molding. A vent in the air vent assembly 140 may be connected to a vent 105 formed in the second mold 102 to discharge the air in the cavity 104 or the gas included in the molding material R to the outside of the second mold 102.

The air vent assembly 140 may include a vent (or a gap or an air passage) extending from a surface facing the cavity 104 to a surface facing the vent 105 of the second mold 102. Through the vent, the air in the cavity 104 or the gas released from the molding material R may be discharged to the vent 105 of the second mold 102.

According to the above-described embodiment, the injection molding device 100 may remove the gas generated from the resin injected into the mold by including the air vent assembly 140. By removing the gas or the air in the mold through the air vent assembly 140, a quality of the molded product may be improved, and corrosion or contamination of the mold may be reduced.

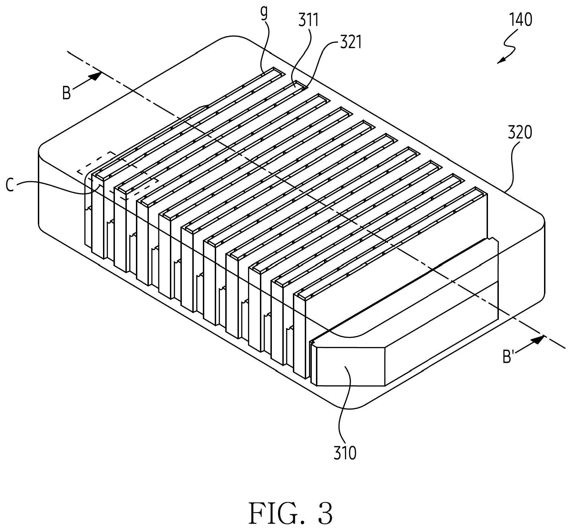

FIG. 3 is a perspective view indicating an exemplary air vent assembly.

Referring to FIG. 3, an air vent assembly 140 may include a first part 310 and a second part 320. The first part 310 may be seated in a core (e.g., the core 120 of FIG. 2), and the second part 320 may be fastened to a second mold (e.g., the second mold 102 of FIG. 2). By fastening the second part 320, the air vent assembly 140 may be fixed to the second mold 102. The first part 310 may be disposed between the second part 320 and the second mold 102 (or the core 120). The first part 310 may be fixed to the second mold 102 by a pressure of the second part 320 and the second mold 102.

The first part 310 may include a plurality of protruding portions 311. The second part 320 may include a plurality of slits 321 into which the plurality of protruding portions 311 are inserted. The first part 310 may be integrally formed. The first part 310 may be formed of one metal or one alloy. The first part 310 may be formed by processing one metal base material. For example, the protruding portion 311 may be formed through computer numerical control (CNC) processing or wire electrical discharge, of one metal base material. The second part 320 may further include a receiving groove in which the first part 310 is seated. The second part 320 may be integrally formed. For example, the second part 320 may be formed of a single material. The second part 320 may be formed of one metal or one alloy. The second part 320 may form the plurality of slits 321and the receiving groove by processing a metal base material. For example, the plurality of slits 321 may be formed through the wire electrical discharge of the base material of the second part 320. The receiving groove in which the first part 310 is seated may be formed through the CNC processing. The air vent assembly 140 formed by assembling the first part 310 and the second part 320 formed of a single material may reduce a tolerance with respect to outer dimensions, as compared with a case in which an air vent is formed by stacking a plurality of plates.

The plurality of protrusion portions 311 inserted into the plurality of slits 321 may be formed to be smaller than the plurality of slits 321. The plurality of protruding portions 311 may be formed to be spaced apart from a wall forming the plurality of slits 321. Gas in a molding material R may be discharged to the outside of a second mold (e.g., the second mold 102 of FIG. 1) through a gap g between the wall and the plurality of protruding portions 311.

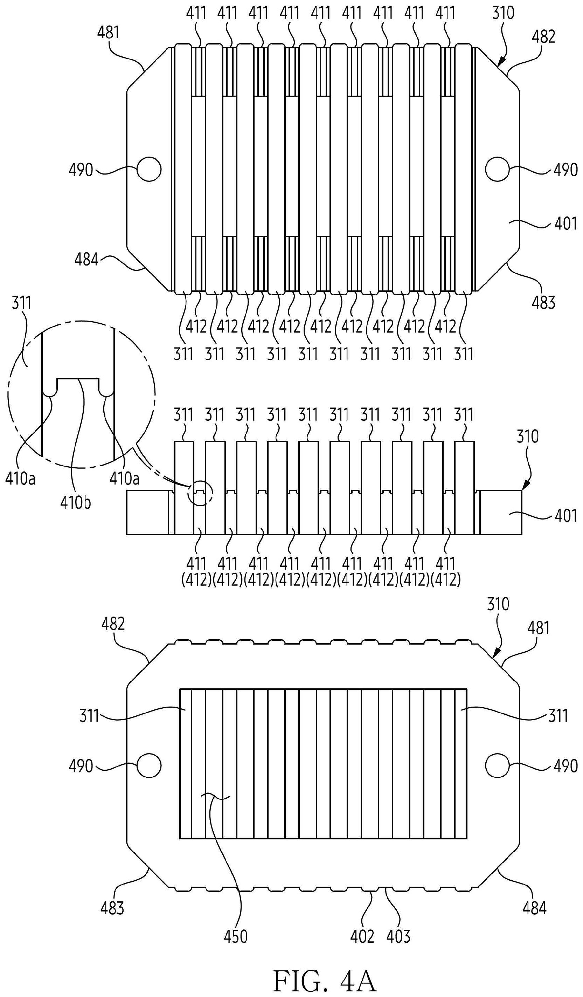

According to the above-described embodiment, the air vent assembly 140 may further include a structure for forming the gap g between the plurality of protruding portions 311 and the wall forming the plurality of slits 321. The structure for forming the gap g for the air vent will be described with reference to FIGS. 4A to 6.

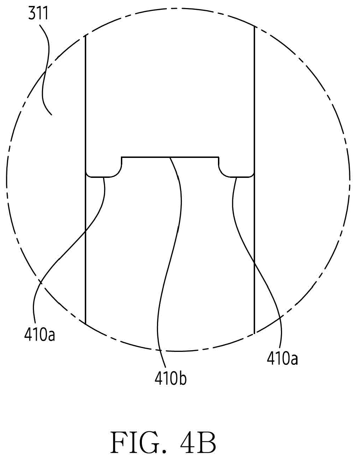

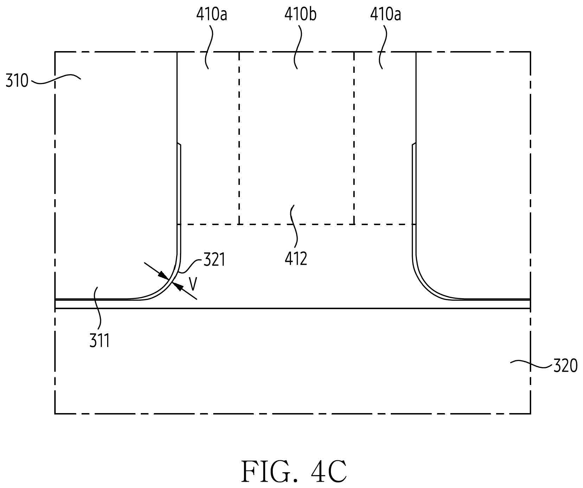

FIG. 4A is diagrams indicating a first part of an exemplary air vent assembly. FIG. 4B is a diagram indicating a side surface of an exemplary bridge of a first part. FIG. 4C is an enlarged view of a portion of an exemplary air vent assembly according to coupling of a first part and a second part.

Referring to FIG. 4A, a first part 310 may include a base 401, a plurality of protruding portions 311, and a plurality of bridges 410. The first part 310 may be a structure remaining after being processed from one base material. For example, the first part 310 may include the plurality of protruding portions 311, the bridges 410, and the base 401 integrally formed from one material.

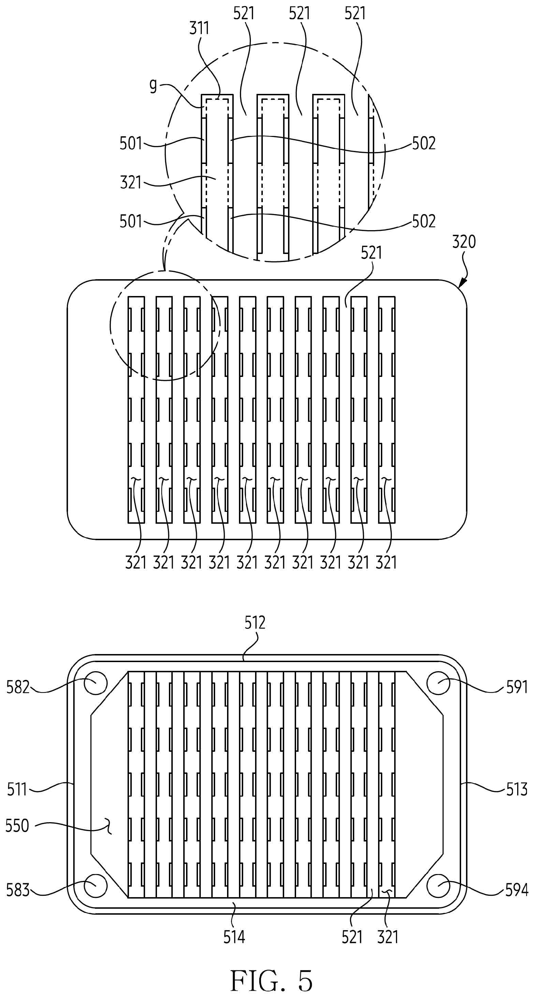

The base 401 may be inserted into a receiving groove (e.g., a receiving groove 550 of FIG. 5) formed in a second part 320. The base 401 may contact a mold when fastened to the mold. For example, the base 401 may be seated in a seating portion formed in a core 120 of a second mold (e.g., the second mold 102 of FIG. 1).

The plurality of protruding portions 311 may protrude from the base 401. The plurality of protruding portions 311 may be referred to as a plate or a flat plate member, in terms of being formed in a plate shape having a thickness thinner relative to a protruding length. The protrusion portions 311 may have a thickness smaller than a width of slits 321. A difference between the thickness of the protruding portions 311 and the width of the slits 321 may be about 0.01 mm to about 0.025 mm. The difference between the thickness of the protruding portions 311 and the width of the slits 321 may be determined in consideration of a discharge of air and an introduction of a resin into the slits 321. When the difference between the thickness of the protruding portions 311 and the width of the slits 321 is large, gas in a molding material R is easily discharged, but the molding material R may be introduced into the slits 321. The molding material R introduced into the slits 321 may increase a defect rate of a molding product or decrease a quality of the molding product. When the difference between the thickness of the protruding portions 311 and the width of the slits 321 is small, it may be difficult to discharge the gas in the molding material R. When it is difficult to discharge the gas in the molded material R, discoloration of the molded product may occur, a defect due to gas residue may occur, or an appearance defect due to air bubbles may occur. Since a gap (e.g., the gap g of FIG. 3) between the protruding portions 311 and a wall forming the slits 321 functions as an air vent, a width of the gap g may be formed to be 0.005 mm to 0.015 mm to reduce the defect. For example, when the width of each of the slits 321 is 1 mm, the thickness of each of the protruding portions 311 may be 0.98 mm to provide an air vent having a width of 0.01 mm. The protrusion portions 311 may be spaced apart from each other. When the first part 310 and the second part 320 are assembled, the wall forming the slits 321 may be inserted into a gap between the protruding portions 311.

Sets 411 and 412 of bridges may connect the protruding portions 311. The sets 411 and 412 of bridges may be remaining portions in which portions between the protruding portions 311 are removed from the base material, for a connection of the protruding portions 311. The sets 411 and 412 of bridges may be at least a portion of a remaining region, which is removed, to form a space 450. An end of each of the protruding portions 311 may be connected to a bridge configuring the set 411 of first bridges, and another end of each of the protruding portions 311 may be connected to a bridge configuring the set 412 of second bridges. The sets 411 and 412 of bridges may form a continuous surface with the base 401. The base 401 and the sets 411 and 412 of bridges may define the space 450. A periphery of the space 450 may be surrounded by the base 401 and the sets 411 and 412 of bridges. As another example, the base 401 may include the set 411 of bridges. The base 401 may include an opening forming the space 450 inside the base 401, and the protruding portions 311 may be supported by a portion of the base 401 extending in a direction perpendicular to a longitudinal direction of the protruding portions 311.

The space 450 between the set 411 of the first bridges and the set 412 of the second bridges may be continuous with a gap g of an air vent assembly 140. The gap g may be a distance between the protruding portions 311 and walls forming the slits 321.

The sets 411 and 412 of the plurality of bridges may include a structure for providing air or gas introduced into the gap g, to the space 450. For example, each of bridges of the set 411 of the first bridges and the set 412 of the second bridges may include a groove 410a dug along an edge contacting the plurality of protruding portions 311. The groove 410a may be continuous with the space 450. Each of the bridges of the set 411 of the first bridges and the set 412 of the second bridges may be connected to the end of the plurality of protruding portions 311. Each of the bridges of the set 411 of the first bridges and the set 412 of the second bridges may include the groove 410a extending along the edge contacting the protruding portions 311 and a surface 410b supporting a wall of the second part 320. The groove 410a may be dug in a semicircular shape. The groove 410a may be formed by wire electrical discharge processing.

Referring to FIG. 4B, the groove 410a is not limited to the semicircular shape and may include another shape. The groove 410a may have an arc shape at a boundary portion contacting the protruding portions 311, and the groove 410a may have an arc shape corresponding to the arc shape at a boundary portion with the surface 410b. When the groove 410a is formed narrowly between the protruding portions 311 and the surface 410b as illustrated in FIG. 4A, the groove 410a may be formed in the semicircular shape. When a distance between the protruding portions 311 and the surface 410b in which the groove 410a is formed is relatively wide as illustrated in FIG. 4B, it may have a groove shape with a rounded periphery. For example, a width of the groove 410a of FIG. 4B may be wider than a diameter of a circle to be rounded. Shapes of the groove 410a and the surface 410b are not limited thereto. The shape of the groove 410a may be formed in a shape for limiting interference between the protrusion 311 and the wall between the slits 321 of the second part 320 disposed on the surface 410b. The shape of the groove 410a may be formed in a shape for connecting to a gap for a vent between the protruding portions 311 and the slits 321.

Referring back to FIG. 4A, in order to be inserted into a receiving groove (e.g., a receiving groove 550 of FIG. 5) of the second part 320, the base 401 of the first part 310 may have a shape corresponding to the receiving groove. For example, each corner 481, 482, 483, and 484 of the base 401of the first part 310 may be chamfered to be inserted into the receiving groove. However, it is not limited thereto, and a shape of each corner 481, 482, 483, and 484 of the base 401 may be determined according to a shape of the receiving groove 550. For example, when a shape of a corner of the receiving groove 550 is rounded, each corner 481, 482, 483, and 484 of the base 401 may be rounded.

The first part 310 may include a concavo-convex shape dug from a side surface of the base 401. It may include a convex portion 402 and a concave portion 403 dug from the side surface of the base 401. The convex portion 402 and the concave portion 403 may be repeatedly disposed along the side surface of the base 401. When the first part 310 and the second part 320 are assembled, the convex portion 402 may be configured to contact the receiving groove 550, and the concave portion 403 may be spaced apart from the receiving groove 550. The base 401 including the concave portion 403 may be configured to transfer gas introduced from the gap g to a vent 105 of the second mold 102. The concave portion 403 may be connected to the gap g. For example, a space between the concave portion 403 and the receiving groove 550 may be connected to the grooves 410a formed in the sets 411 and 412 of bridges by extending along the side surface of the base 401. The space between the concave portion 403 and the receiving groove 550 may be connected to the gap g through the groove 410a connected to the gap g formed according to the assembly of the first part 310 and the second part 320. During an injection molding process, the gas released from the molding material R may be transferred to the vent 105 of the second mold 102 through the gap g, the groove 410a, and the space between the concave portion 403 and the receiving groove 550.

Referring to FIG. 4C, the convex portion 402 may be formed at the end of the protruding portion 311, and the concave portion 403 may be formed at an end of the bridges 410. At least a portion of the protruding portion 311 may be spaced apart from the slit 321 to provide a vent V. A length of the protrusion 311 may be formed to be relatively longer than that of the bridge 412. For example, the protrusion 311 in which the convex portion 402 is formed may be formed to be longer than the bridges 410 in which the concave portion 403 is formed. By forming the protrusion 311 long (e.g., the convex portion 402 is formed on the protruding portions 311), an air vent assembly (e.g., the air vent assembly 140 of FIG. 1) may secure a relatively wide space for the vent V.

The groove 410a may be connected to the vent V, connected to the concave portion 403 and the space 450, and may be configured to transfer volatile gas or air transferred through the vent V to the outside of the mold.

Referring back to FIG. 4A, the first part 310 may further include a hole 490 penetrating the base 401. An external object may be inserted into the hole 490. The external object may be a bolt. The hole 490 may form a screw line corresponding to a screw line of the bolt on an inner circumferential surface. The bolt may be inserted along the screw line formed on the inner circumferential surface of the hole 490 to press the second part 320. As the bolt protrudes toward the second part 320 after penetrating the hole 490, a surface of the second part 320 may be pressed. The first part 310 may move away from the second part 320 by a protruding distance of the bolt. The first part 310 may be separated from the second part 320 by a nut protruding through the hole 490.

The space 450 formed in the base 401 may correspond to a shape of the seating portion formed in the core 120 of the second mold 102. A height of the air vent assembly 140 coupled to the seating portion in which the vent 105 is formed without penetrating the entire second mold 102 may be low. When a length of a vent portion increases, it may be difficult to discharge gas. In order to prevent the molding material R from being introduced into the gap g, when the length of the gap g having a narrow width of approximately 0.005 mm to 0.015 mm increases, resistance to the flow of air or gas may increase. The air vent assembly 140 having a low height may reduce a length of the ventiliation portion through which the gas passes, thereby easily discharging air in a cavity 104 or gas in the molding material R. For example, when the height of the air vent assembly 140 is 10 mm, a length of the vent portion may be set to 10 mm. The air vent assembly 140 having a structure seated on the second mold 102 may reduce the length of the vent portion than the air vent penetrating the second mold 102.

FIG. 5 are diagrams indicating a second part of an exemplary air vent assembly.

Referring to FIG. 5, a second part 320 may include a plurality of slits 321 and a partition wall 521.

Each of the plurality of protruding portions 311 may be inserted into the plurality of slits 321. The plurality of protruding portions 311 may be spaced apart from the partition wall 521 forming the plurality of slits 321. A gap g between the plurality of protrusion portions 311 and the partition wall 521 may operate as an air vent. The plurality of slits 321 may extend in a direction parallel to each other. The plurality of slits 321 may be spaced apart from each other. The partition wall 521 may be disposed between the plurality of slits 321. The partition wall 521 may be formed in a connected form without being separated. The partition wall 521 may be a remaining region after forming the slits 321 formed through wire electrical discharge in the second part 320.

The second part 320 may further include protrusions 501 and 502. The protrusions 501 and 502 may be configured to maintain the gap g between the protruding portions 311 and the partition wall 521. The protrusions 501 and 502 may protrude from the partition wall 521 by 0.005 mm to 0.015 mm. For example, each of the protrusions 501 and 502 may have a protrusion length of 0.01 mm. The length of the protrusions 501 and 502 may determine a width of the gap g. For example, the width of the gap g may be 0.005 mm to 0.015 mm, which is the protruding length of the protrusions 501 and 502. The protrusions 501 and 502 may be spaced apart from each other in an extending direction of the partition wall 521 (or a longitudinal direction of the slit 321). For example, the protrusions 501 and 502 may be spaced apart from each other by 2 mm to 4 mm in the extending direction of the partition wall 521. The separated space may be connected to the gap g. The protrusions 501 and 502 may separate a protruding portion inserted into a slit from the partition wall. For example, the protrusions 501 and 502 may protrude from the partition wall 521 into each of the slits 321. The protrusions 501 and 502 may contact the protrusions 311 when a first part 310 and the second part 320 are assembled. For example, the first protrusions 501 protruding from the partition wall 521 forming a surface of a slit among the slits 321 may contact a surface of the protruding portion inserted into the slit. The second protrusions 502 protruding from the partition wall 521 forming another surface of the slit among the slits 321 may contact another surface of the protruding portion inserted into the slit. The protruding portions 311 disposed between the first protrusions 501 and the second protrusions 502 may be fixed inside each of the slits 321. A movement of the protruding portions 311 in a direction perpendicular to a longitudinal direction of the protruding portions 311 (or the longitudinal direction of the slit 321) may be limited.

The air vent assembly 140 may constantly maintain the width of the gap g by limiting the movement of the protruding portions 311. The constantly maintained gap g may facilitate a discharge of gas discharged from a molding material R and gas in a cavity 104, and may restrict inflow of the molding material R into the gap g, thereby improving a quality of a molded product.

The second part 320 may include side walls 511, 512, 513, and 514 extending to a rear surface of the second part 320 and a receiving groove 550. The side walls 511, 512, 513, and 514 may form a side surface of the second part 320. Since a side surface of the air vent assembly 140 in which the first part 310 and the second part 320 are assembled are the same as the side surface of the second part 320, the side walls 511, 512, 513, and 514 may form the side surface of the air vent assembly 140.

The receiving groove 550 may be defined by the side walls 511, 512, 513, and 514. For example, the receiving groove 550 may be surrounded by the side walls 511, 512, 513, and 514. A shape of the receiving groove 550 may correspond to a shape of a base 401 of the first part 310. The receiving groove 550 may provide a space in which the base 401 may be accommodated. The receiving groove 550 may have a shape corresponding to shapes of corners 481, 482, 483, and 484 of the base 401.

The second part 320 may further include fastening grooves 581, 582, 583, and 584. The fastening grooves 581, 582, 583, and 584 may be formed on the rear surface of the second part 320. The fastening grooves 581, 582, 583, and 584 may have a structure for being fastened to a second mold (e.g., the second mold 102 of FIG. 1). The second mold 102 and the second part 320 may be coupled through a screw inserted into the fastening grooves 581, 582, 583, and 584. The fastening grooves 581, 582, 583, and 584 may include a screw line. Although it is illustrated that the second mold 102 and the second part 320 are screw-coupled, they are only exemplary and are not limited thereto. For example, the second mold 102 and the second part 320 may be fastened through screw coupling, fitting coupling, hook coupling, or another mechanical coupling.

The side walls 511, 512, 513, and 514 may have a chamfer shape in a region (e.g., a corner region of the second part 320) where each of the side walls 511, 512, 513, and 514 meets to provide a region for forming the fastening grooves 581, 582, 583, and 584. The chamfer shape may be a shape corresponding to the corners 481, 482, 483, and 484 of the first part 310. To provide a space for the fastening grooves 581, 582, 583, and 584, the corners 481, 482, 483, and 484 of the first part 310 may be chamfered.

The second part 320 according to the above-described embodiment may facilitate gas discharge of the air vent assembly 140. The protrusions 501 and 502 of the second part 320 may fix the protruding portions 311 and limit the movement of the protruding portions 311, thereby constantly maintaining the width of the gap g. The constantly maintained gap g may discharge the gas discharged from the molding material R and the gas in the cavity 104 to the outside of the second mold 102. By maintaining the narrowly formed gap g, the air vent assembly 140 may improve the quality of the molded product by limiting the inflow of the molded material R into the interior.

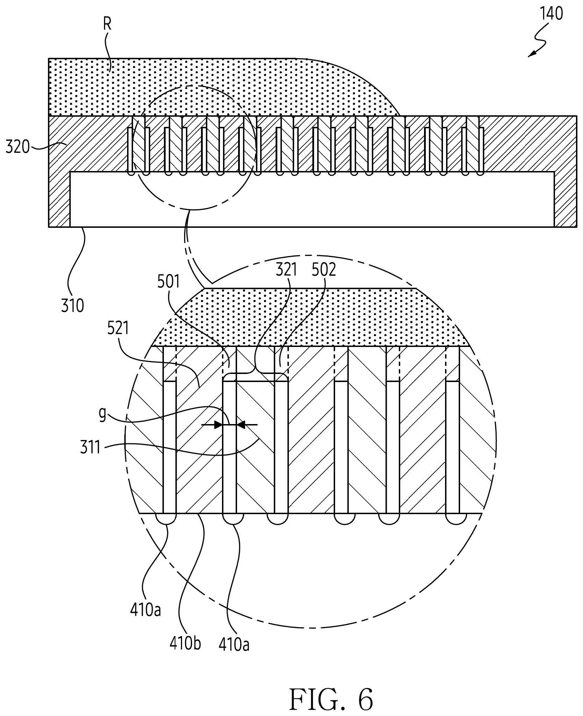

FIG. 6 is a cross-sectional view of an exemplary air vent assembly in which a first part and a second part are assembled.

An air vent assembly 140 may constantly maintain a gap g. Each of protruding portions 311 of a first part 310 of the air vent assembly 140 may be disposed on slits 321 of a second part 320. Each of the protruding portions 311 disposed in the slits 321 may be fixed by protrusions 501 and 502 protruding from a partition wall 521. The protrusions 501 and 502 may press and fix a portion of both side surfaces of the protruding portions 311.

When a molding material R is introduced into a cavity (e.g., the cavity 104 of FIG. 2) as the air vent assembly 140 is attached to a second mold (e.g., the second mold 102 of FIG. 1), the protruding portions 311 may receive a force in an injection direction (e.g., a right direction) of the molding material R by injection of the molding material R. The protrusions 501 and 502 may prevent a width of the gap g from changing due to pushing of the protruding portions 311. Bridges 410 may support the partition wall 521. The partition wall 521 may be seated on a surface 401b of the bridges 410. Semicircular grooves 410a and 410b formed in the bridges 410 may be connected to the gap g, and gas introduced into the gap g through the gap g may be transferred to the outside of the first part 310. For example, gas released from the molding material R may be transferred to a groove 550 of the first part 310 through the gap g, and the gas transferred to the groove 550 may be discharged to the outside of the second mold 102 through a vent 105 of the second mold 102.

According to the above-described embodiment, the air vent assembly 140 may constantly maintain the width of the gap g through the protrusions 501 and 502. The gas released from the molding material R and the gas in the cavity (e.g., the cavity 104 of FIG. 2) may be discharged to the outside through the gap g maintained at the constant width.

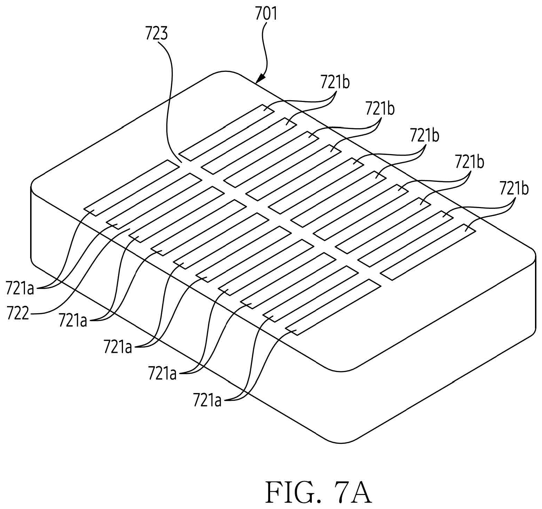

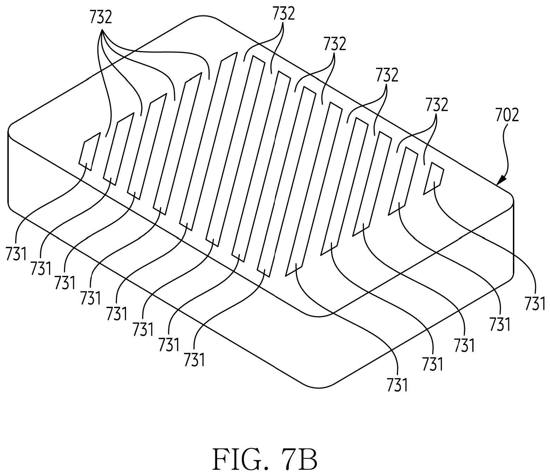

FIGS. 7A and 7B are top views indicating an exemplary air vent assembly.

Referring to FIG. 7A, slits 721a and 721b of an air vent assembly 701 may be spaced apart in a first direction by a first partition wall 722. A second partition wall 723 may separate the slits 721a and 721b in a second direction perpendicular to the first direction.

The first partition wall 722 may correspond to the partition wall 521 of FIG. 5. The first partition wall 722 may extend in the second direction. The second partition wall 723 may divide the slits 721a and 721b by extending in the first direction.

A second part of the air vent assembly 701 may have protruding portions corresponding to shapes of the separated slits 721a and 721b.

Referring to FIG. 7B, an air vent assembly 702 may have slits 731 extending in a diagonal direction on a side wall of a first part. The slits 731 may be divided by a partition wall 732. A second part of the air vent assembly 702 may include protruding portions extending in the diagonal direction to correspond to a shape of the slits 731.

The protruding portions and the slits 731, extending in the diagonal direction may be inclined in a moving direction of a resin and receive a force, thereby preventing the protruding portions from being pushed according to an injection pressure.

The air vent assemblies 701 and 702 of FIGS. 7A and 7B may include the shapes of the bridges 411 and 412, the convex portion 402 and the concave portion 403, and a structure similar to the protrusions 501 and 502 of FIG. 5.

For example, through a groove 410a formed in sets 411 and 412 of bridges, it may transfer gas to the outside of a second mold (e.g., the second mold 102 of FIG. 1) through a gap and the concave portion 403 of the air vent assemblies 701 and 702. It may include the protrusions 501 and 502 to prevent the protruding portion from being pushed.

Not only disposition of the slits 721a, 721b, and 731, but also a shape of the slits may be variously formed. For example, the slits are formed in a rectangular structure, but are not limited thereto and may be formed in a trapezoidal structure as illustrated in FIG. 7B. The slits may be rectangular slits with rounded corners, slits with ends processed in a semicircular shape, or elliptical slits.

According to the above-described embodiment, an air vent assembly 140, 701, or 702 may provide an air vent assembly formed of a single material, thereby shortening a vent portion and enabling stable discharge of gas. By shortening a height of the air vent assembly 140, 701, or 702, it may be disposed on a mold and stably fixed.

Hereinbefore, a structure of an air vent assembly and an injection molding device including the air vent assembly has been described with reference to FIGS. 1 to 7B. Hereinafter, an operation of the injection molding device will be described.

Referring to FIGS. 2 and 6, a first mold 101 may provide a cavity 104 for manufacturing a molded article by moving toward a second mold 102. The cavity 104 may have a shape corresponding to a shape of the molded article. A molding material R may be injected into the cavity 104 through an inlet 103. The molding material R may be injected into the inlet 103 through a nozzle, and an injection pressure may be applied into the cavity 104 formed by a core 120 and the first mold 101 while the molding material R is injected. Even after the molding material R is injected, the pressure may be maintained for the shape of the molded product while the molding material R is cooled.

The injection pressure applied while or after the molding material R is introduced may press protruding portions 311. The protrusions 501 and 502 toward the inside of the slit may reduce pushing due to the injection pressure by fixing the protruding portions 311. For example, a gap g between the protruding portions 311 and the partition wall 521 may be maintained despite the injection pressure applied while or after the molding material R is introduced. In the molding material R, internal gas may be discharged through the gap g by the pressure. The gas to be discharged through the gap g may be discharged to the outside through a vent 105 of the second mold 102.

The molding material R in the cavity 104 of the molds 101 and 102 may be cooled to form an injection product. The air vent assembly 140 may improve a quality of the injection product by preventing the inflow of the molding material R into the gap g that is constantly maintained.

There may be a need for a method for discharging gas in a resin or air in a cavity of a mold to the outside. An air vent assembly may provide a configuration for reducing a length of a vent and for stably discharging the gas in the resin.

The technical problems to be achieved in this document are not limited to those described above, and other technical problems not mentioned herein will be clearly understood by those having ordinary knowledge in the art to which the present disclosure belongs, from the following description.

According to the above-described embodiment, an air vent assembly (e.g., the air vent assembly 140 of FIG. 1) may comprise a first part (e.g., the first part 310 of FIG. 3) and a second part (e.g., the second part 320 of FIG. 3). The first part 310 may include a plurality of protruding portions 311 protruding toward the second part. The second part 320 may include a plurality of slits (e.g., the plurality of slits 321 of FIG. 3) and a receiving groove (e.g., the receiving groove 550 of FIG. 5). The plurality of slits 321 may accommodate each of the plurality of protruding portions 311. The receiving groove 550 may provide a space in which the first part 310 is disposed. The second part 320 may be integrally formed and may be formed of a metal material.

Each of the slits 321 may include a protrusion (e.g., one of the protrusions 501 and 502 of FIG. 5). The protrusion may protrude from a partition wall 521 that separates the slits 321 into each of the slits 321 and contact the protrusions 311.

In order to maintain a gap g between the protruding portions and the partition wall 521, the protrusion 501 or 502 may separate a protruding portion accommodated in a slit in which the protrusion 501 or 502 is disposed from the partition wall 521, and limit a movement of the protruding portion in a direction perpendicular to a longitudinal direction of the slit.

According to the above-described embodiment, the air vent assembly 140 may constantly maintain a width of the gap g through the protrusions 501 and 502. Gas released from a molding material R and air in a cavity (e.g., the cavity 104 of FIG. 2) may be discharged to an outside through the gap g maintained at the constant width.

According to an embodiment, the first part 310 may include a set 411 of first bridges connecting an end of the plurality of protruding portions 311 and a set 412 of second bridges spaced apart from the set 411 of first bridges and connecting another end of the plurality of protruding portions 311. According to an embodiment, a space between the set 411 of the first bridges and the set 412 of the second bridges may be continuous with the gap g.

According to an embodiment, each of bridges of the set 411 of first bridges and the set 412 of second bridges may include a groove dug along an edge contacting the plurality of protrusions 311.

The groove may be continuous with the space.

Each of bridges of the set 411 of first bridges and the set 412 of second bridges may support the partition wall 521.

The first part 310 may further include a concave portion (e.g., the concave portion 403 of FIG. 4A). The concave portion 403 may be dug from a base 401 inserted into the receiving groove 550 and a side surface of the base 401.

The concave portion 403 and the gap g may be connected so that gas in the gap g moves between the concave portion 403 and the receiving groove 550.

Each edge of the base 104 may be chamfered.

The second part 320 may further include a side wall 511, 512, 513, or 514 forming a side surface of the second part 320.

The second part 320 may further include a fastening groove 581, 582, 583, or 584 formed in a corner of the side wall 511, 512, 513, or 514 to be coupled to an external structure.

According to an embodiment, the first part 310 may include a hole.

According to an embodiment, the hole may be configured to separate the first part 310 from the second part 320 according to a pressure of the second part 320 by an external object inserted into the hole.

According to an embodiment, the protrusion 501 or 502 may be protruded from the partition wall 521 by 0.005mm to 0.015mm.

According to an embodiment, another protrusion 501 or 502 disposed in the slit where the protrusion 501 or 502 is disposed may be spaced apart from the protrusion 501 or 502 at a first distance.

According to an embodiment, the first distance may be 2mm to 4mm.

According to an embodiment, a distance between a protruding portion disposed within a slit of the plurality of slits 311 and the partition wall 521 forming the slit may be 0.05mm to 0.015mm.

The second part 320 may be formed of one material.

The second part 320 may include a first side wall 511, 512, 513, or 514 and a second side wall 511, 512, 513, or 514 extending in a first direction perpendicular to the first side wall 511, 512, 513, or 514 and longer than the first side wall 511, 512, 513, or 514.

The plurality of slits 321 may be parallel to the first side wall 511, 512, 513, or 514 and spaced apart from each other in the first direction.

Gas located at a front of the second part 320 may move to a rear of the first part 310 through the gap g.

According to an embodiment, an injection molding device (e.g., the injection molding device 100 of FIG. 1) may comprise a first mold (e.g., the first mold 101 of FIG. 1) and a second mold (e.g., the second mold 102 of FIG. 2). The first mold 101 may include a cavity 104 configured to accommodate a resin R. The second mold 102 may include a core 120 configured to press the resin R accommodated in the cavity 104, and may be configured to be movable relative to the first mold 101. The injection molding device 100 may further include an air vent assembly (e.g., the air vent assembly 140 of FIG. 1).

The air vent assembly (e.g., the air vent assembly 140 of FIG. 1) may comprise a first part (e.g., the first part 310 of FIG. 3) and a second part (e.g., the second part 320 of FIG. 3). The first part 310 may include a plurality of protruding portions 311 protruding toward the second part. The second part 320 may include a plurality of slits (e.g., the plurality of slits 321 of FIG. 3) and a receiving groove (e.g., the receiving groove 550 of FIG. 5). The plurality of slits 321 may accommodate each of the plurality of protruding portions 311. The receiving groove 550 may provide a space in which the first part 310 is disposed. The first part 310 and the second part 320 may be integrally formed and may be formed of a metal material.

According to the above-described embodiment, an air vent assembly 140 may provide an air vent assembly formed of a single material, thereby shortening a vent portion and enabling stable discharge of gas. By shortening a height of the air vent assembly 140, it may be disposed on a mold and stably fixed.

Each of the slits 321 may include a protrusion (e.g., one of the protrusions 501 and 502 of FIG. 5). The protrusion may protrude from a partition wall 521 that separates the slits 321 into each of the slits 321 and contact the protrusions 311.

In order to maintain a gap g between the protruding portions and the partition wall 521, the protrusion 501 or 502 may separate a protruding portion accommodated in a slit in which the protrusion 501 or 502 is disposed from the partition wall 521, and limit a movement of the protruding portion in a direction perpendicular to a longitudinal direction of the slit.

According to the above-described embodiment, the injection molding device 100 may remove gas generated from a resin injected into the mold by including the air vent assembly 140. By removing gas or air in the mold through the air vent assembly 140, a quality of a molded product may be improved, and corrosion or contamination of the mold may be reduced.

According to an embodiment, the first part 410 may include a set 411 of first bridges connecting an end of the plurality of protruding portions 311 and a set 412 of second bridges spaced apart from the set 411 of first bridges and connecting another end of the plurality of protruding portions 311. According to an embodiment, a space between the set 411 of the first bridges and the set 412 of the second bridges may be continuous with the gap g.

According to an embodiment, each of bridges of the set 411 of first bridges and the set 412 of second bridges may include a groove dug along an edge contacting the plurality of protrusions 311.

The groove may be continuous with the space.

The bridges of the set 411 of first bridges and the set 412 of second bridges may support the partition wall 521.

The first part 310 may further include a base 401 inserted into the receiving groove 550 and a concave portion 403 dug from a side surface of the base 401.

The gap g may be configured to move gas in the gap to an interval between the recess and the receiving groove.

The effects that can be obtained from the present disclosure are not limited to those described above, and any other effects not mentioned herein will be clearly understood by those having ordinary knowledge in the art to which the present disclosure belongs, from the following description.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An air vent assembly (140) comprising:
a first part (310) including a plurality of protruding portions (311); and
a second part (320) integrally formed of a metal material, the second part (320) including a plurality of slits (321) into which each of the plurality of protruding portions (311) is inserted and a receiving groove (550) in which the first part (310) is accommodated;
wherein each of the plurality of slits (321) includes a protrusion (501; 502) protruding from a partition wall (521) that separates the plurality of slits (321) into each of the plurality of slits (321) and contacting the plurality of protruding portions (311), and
wherein the protrusion (501; 502) maintains a gap (g) between the plurality of protruding portions and the partition wall (521), by separating a protruding portion accommodated in a slit from the partition wall (521) and limiting a movement of the protruding portion in a direction perpendicular to a longitudinal direction of the slit.

2. The air vent assembly (140) according to claim 1, wherein the first part (310) includes a set of first bridges (411) connecting an end of the plurality of protruding portions (311) and a set of second bridges (412) spaced apart from the set of first bridges (411) and connecting another end of the plurality of protruding portions (311), and
wherein a space between the set of first bridges (411) and the set of second bridges (412) is continuous with the gap (g).

3. The air vent assembly (140) according to claim 2, wherein each of bridges of the set of first bridges and the set of second bridges includes a groove dug along an edge contacting the plurality of protrusions (311), and
wherein the groove is continuous with the space.

4. The air vent assembly (140) according to anyone claims of 2 or 3, wherein each of bridges of the set of first bridges (411) and the set of second bridges (412) supports the partition wall (521).

5. The air vent assembly (140) according to any one of claims 1 to 4, wherein the first part (310) further includes a base (410) inserted into the receiving groove (550) and a concave portion (403) dug from a side surface of the base (410), and
wherein the concave portion (403) is connected to the gap (g).

6. The air vent assembly (140) according to claim 5, wherein each corner of the base (410) is chamfered.

7. The air vent assembly (140) according to any one of claims 1 to 6, wherein the second part (320) further includes a side wall (511; 512; 513; 514) forming a side surface of the second part (320), and a fastening groove (581, 582, 583, 584) formed in a corner region defined by the side wall (511; 512; 513; 514) to be coupled to an external structure.

8. The air vent assembly (140) according to any one of claims 1 to 7, wherein the first part (310) includes a hole, and
wherein the hole is configured to separate the first part (310) from the second part (320) according to a pressure of the second part (320) by an external object inserted into the hole.

9. The air vent assembly (140) according to any one of claims 1 to 8, wherein the protrusion (501; 502) is protruded from the partition wall (521) by 0.005mm to 0.015mm.

10. The air vent assembly (140) according to any one of claims 1 to 9, wherein the protrusion (501; 502) is spaced apart from another protrusion (501; 502) disposed in the slit where the protrusion (501; 502) is disposed at a first distance.

11. The air vent assembly (140) according to claim 10, wherein the first distance is 2mm to 4mm.

12. The air vent assembly (140) according to any one of claims 1 to 11, wherein a distance between a protruding portion disposed within a slit of the plurality of slits and the partition wall (521) forming the slit is 0.05mm to 0.015mm.

13. The air vent assembly (140) according to any one of claims 1 to 12, wherein the second part (320) is formed of one material.

14. The air vent assembly (140) according to any one of claims 1 to 13, wherein the second part (320) includes a first side (511; 512; 513; 514) wall and a second side (511; 512; 513; 514) wall extending in a first direction perpendicular to the first side wall (511; 512; 513; 514) and longer than the first side wall (511; 512; 513; 514), and
wherein the plurality of slits (321) are parallel to the first side wall (511; 512; 513; 514) and spaced apart from each other in the first direction.

15. The air vent assembly (140) according to any one of claims 1 to 14, wherein the gap (g) moves gas located at a front of the air vent assembly to a rear of the air vent assembly (140).
